Europäisches Patentamt

European Patent Office

Office européen des brevets

(11) Publication number: **0 305 530**
**A1**

## (12) EUROPEAN PATENT APPLICATION
published in accordance with Art. 158(3) EPC

(21) Application number: **88901465.0**

(22) Date of filing: **08.02.88**

Data of the international application taken as a basis:

(86) International application number:
**PCT/JP88/00117**

(87) International publication number:
**WO88/07237 (22.09.88 88/21)**

(51) Int. Cl.³: **G 06 F 7/00**
**G 06 F 9/22, G 06 F 11/30**

(30) Priority: **09.03.87 JP 52217/87**

(43) Date of publication of application:
**08.03.89 Bulletin 89/10**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **YONEKURA, Mikio**
**Keio Takao Mansion 1103 1231-36, Hatsuzawamachi**
**Hachioji-shi Tokyo 193(JP)**

(74) Representative: **Brunner, Michael John et al,**
**GILL JENNINGS & EVERY 53-64 Chancery Lane**
**London WC2A 1HN(GB)**

(54) **HIGH-SPEED FLOATING POINT ARITHMETIC UNIT.**

(57) A high-speed floating point arithmetic unit for micro-program-controlled arithmetic and comparation/logic operations, comprising a decoder (2) for various status signals including one indicating the generation of error in the arithmetic section (1), and a selector (4) for selecting one of the outputs of the decoder (2) based on microprogram control. In a stage preceding the selector (4) there is further provided an error memory (3) for storing information about the presence of an error during a series of operations, said information corresponding to each of the error-involving outputs from the decoder (2).

Fig. 3

# DESCRIPTION

## TITLE OF THE INVENTION
Fast Floating Point Processor

## TECHNICAL FIELD

The present invention relates to a fast floating point processor.

## BACKGROUND ART

As the speed of floating point calculation is very slow in general purpose processors, fast floating point processors ( hereinafter called FFP ) which use a hardware construction for floating point calculation only, are used for that purpose.

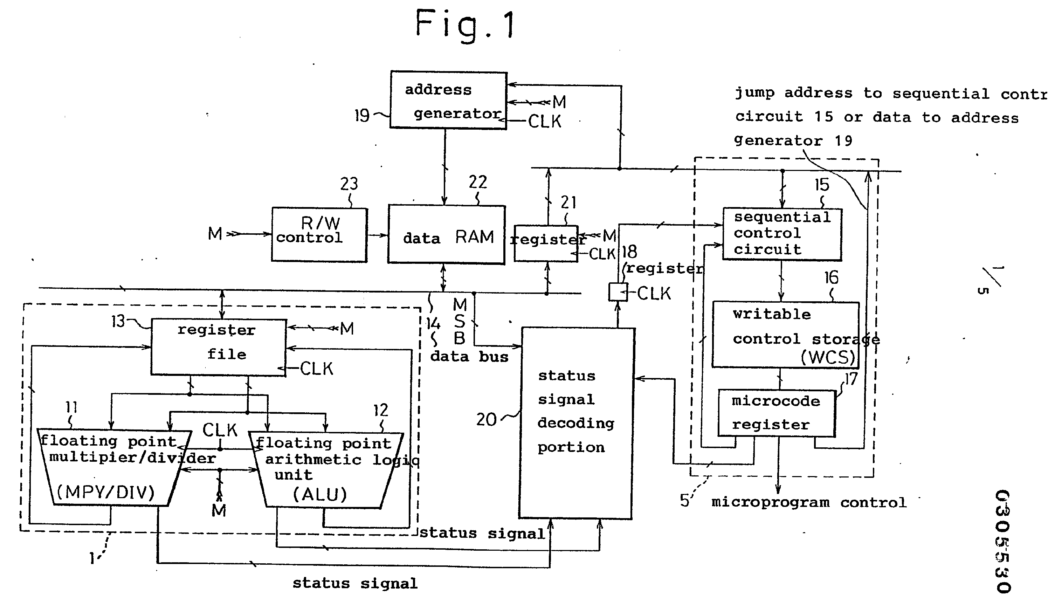

Figure 1 shows an outline of the construction of an example of an FFP.

In Fig. 1, reference numeral 22 is a data RAM, which temporarily stores data provided from a host processor ( not shown ) to be used for calculations and the calculation results in the FFP, and reference numeral 23 is an R/W control circuit, which controls the operations of reading from and writing to the data RAM 22. The host processor controls the R/W control circuit 23 to write the data to be used for calculations through the data bus 14 into the data RAM 22, and to read the calculation results which are stored in the data RAM 22 after the corresponding calculations are completed.

Reference numeral 1 is a calculating portion, which comprises a register file 13, a floating point arithmetic logic unit ( hereinafter called ALU ) 12, and a floating point multiplier/divider ( hereinafter called MPY/DIV ) 11.

According to the microprogram control ( described later ), the register file 13 reads the data to be used for calculation from the data RAM 22, supplies the data to the ALU 12 or the MPU/DIV 11, and temporarily stores the data during the calculations and the final results of the calculations. The final results are read from the register file 13 and written into the data RAM 22.

The ALU 12 executes addition/subtraction and comparison/logical calculations, and the MPY/DIV 11 executes multiplication/division calculations. Each of the ALU 12 and the MPY/DIV 11 has two output ports, one port of each being used to output the results of the arithmetic calculations like the addition/subtraction or multiplication/division. The results of the arithmetic calculations are input to the register file 13. The other port of each is used to output status signals, which include the results of the comparison/logical calculations ( hereinafter called non-exception status ), or other status signals showing the type of error which has occurred ( hereinafter called exception status ) when an error ( for example, overflow, underflow, input data is not a number, or not normalized, etc. ) occurs during each calculation cycle in the ALU 12 or the MPY/DIV 11.

Reference numeral 5 is a microprogram controlling portion which controls the execution of the calculations in the FFP and comprises a sequential control circuit 15, a writable control storage ( hereinafter called WCS ) 16, and a microcode register 17.

At the beginning of the execution of the calculations in the FFP, a microprogram is written into the WCS 16 by the host processor. When an address is output from the sequential control circuit 15, the WCS 16 outputs a microinstruction ( microcode ) which has been written in that address to the microcode register 17. Usually, the sequential control circuit 15 increments the address to be output when the execution of each microinstruction is completed, and consequently, the microinstruction of the next address is loaded in the microcode register 17. When a conditional jump instruction is loaded in the microcode register 17, and if the bit of the register 18 is in a predetermined state, the output of the sequential control circuit 15 jumps to the address loaded in a jump address field. The output of the status signal decoding portion 20 is loaded in the register 18.

The status signal decoding portion 20 inputs the most significant bit ( hereinafter called MSB ) of the data read through the data bus 14 from the data RAM 22 or from the register file 13, and outputs the status signal instructed to be output by the conditional jump instruction loaded in the microcode register 17, to the register 18.

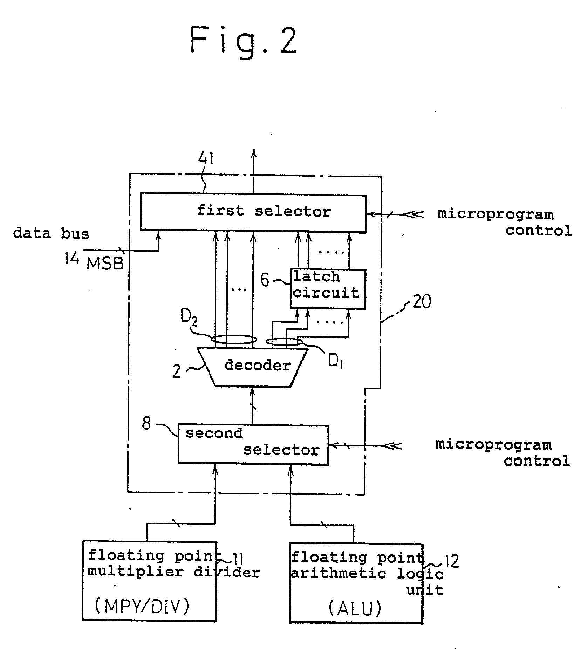

Figure 2 shows an example of the conventional construction of the status signal decoding portion 20.

The status signal decoding portion 20 in Fig. 2 comprises a first selector 41, a second selector 8, a decoder 2, and a latch circuit 6. The second selector 8, under the microprogram control, selects one of the status signals from the ALU 12 and the status signals from the MPY/DIV 11 at the corresponding timing of the output of the ALU 12 or the MPY/DIV 11. In the example of the Fig. 1, it is assumed that the ALU 12 and the MPY/DIV 11 are controlled so that the ALU 12 and the MPY/DIV 11 do not output effective outputs at the same time.

The output of the second selector is decoded at the decoder 2, and the corresponding one bit of the outputs of the decoder 2 is made "1", where the outputs of the decoder 2 are provided in correspondence to the types of comparison/logic calculations and the types of errors.

In Fig. 2, the group of outputs of the decoder 2 corresponding to the aforementioned non-exception status signals are denoted by $D_1$, and the group of outputs of the decoder 2 corresponding to the aforementioned exception status signals are denoted by $D_2$.

In the construction of Fig. 2, the outputs of the decoder belonging to the group $D_2$ are directly applied to the first selector 41 in parallel with each other, and the outputs of the decoder belonging to the group $D_1$ are applied to the latch circuit 6 in parallel with each other, held there, and output therefrom to the first selector 41 in parallel with each other and in parallel to the outputs of the decoder belonging to the group $D_2$. The MSB of the data from the data RAM 22 or the register file 13 is also applied to the first register 41 through the data bus 14 and in parallel to the above outputs of the decoder 2. According to the microprogram control ( the instructions included in the conditional jump instructions loaded in the microcode register 17 ), one of the above parallel inputs is selected and is loaded in the register 18.

The latch circuit 6 is provided because, in general, the abovementioned non-exception status signals are data used in the normal execution processes, e. g., the results of the comparison calculation, or the like, and since a branch instruction depending on such data often consists of a plurality of conditional jump instructions, the data must be held even after the execution of one of the conditional jump instructions is completed.

On the other hand, regarding the group of outputs of the decoder denoted by the $D_2$ corresponding to the exception status, in general, whether or not at least one error has occurred is once determined, then the next step is immediately determined, e. g., if it is determined that no error has occurred, the microprogram is then allowed to proceed to the next normal step, or if it is determined that an error has occurred, then, for example, the execution of the FFP must be stopped and the calculation must be re-started from the beginning. Therefore, conventionally, it is deemed not necessary to hold the exception status signals at the latch circuit or the like for checking errors in each calculation in the ALU 12 or the MPY/DIV 11.

Further, reference numeral 19 in Fig. 2 is an address generator, which generates addresses for the data RAM 22, under the microprogram control. To generate the addresses, the aforementioned jump address field ( this consists of 12 bits in the example of Fig. 1 ) in the microcode register 17 is used. The jump address field usually is not used except when jump instructions ( including the conditional jump instructions ) are executed as mentioned before. Therefore, the jump address field can be used, in addition to the above, to read out the data necessary to generate addresses in the address generator 19 ( for example, it may be an output of the address generator 19 ) thereto from the WCS 16, and to output the data to the address generator 19. Alternatively, by using the register 21, data read out from the data RAM 22 can be input to the address generator 19. By using the above data, and if necessary, by some calculation, the address generator 19 obtains the address needed to access the data RAM 22, and the data addressed by the output of the address generator 19 is read out from the data RAM 22 under the control of the R/W control circuit 23 according to the microprogram control.

By the construction of the status signal decoding portion 20 shown in Fig. 2, when each calculation cycle is completed in the ALU 12 or the MPY/DIV 11, the exception status signal regarding the preceding calculation cycle is renewed, and thus whether or not an error occurred in the preceding calculation cycle is not memorized. Therefore, to check whether or not an error exists in each calculation cycle, it is necessary to check all the outputs of the decoder belonging to the aforementioned group $D_2$ by selecting each of the outputs in turn at the first selector 4 for each calculation cycle.

More concretely, to carry out the above operation, the conditional jump instructions to select all of the outputs of the decoder belonging to the aforementioned group $D_2$ must be loaded in the microcode register 17 in turn for each calculation cycle in the ALU 12 or the MPY/DIV 11. As mentioned before, when a jump instruction is loaded in the microcode register 17, the aforementioned jump address field ( this consists of 12 bits in the example of Fig. 2 ) is occupied. Therefore, the increase in the number of executions of the jump instructions prevents the jump address field from being used for another purpose, ( e. g., sending data to the address generator 19, or the like ).

DISCLOSURE OF THE INVENTION

An object of the present invention is to provide a fast floating point processor wherein the number of executions of jump instructions in microprogram control is reduced.

The fast floating point processor according to the present invention comprises a calculating portion which carries out a series of calculations consisting of arithmetic and comparison/logical calculations under the control by a microprogram controlling portion, and which outputs, for each cycle of the calculations, non-exception status signals which indicate the results of the comparison/logical calculations, or exception status signals each of which indicate an occurrence of an error in the arithmetic or comparison/logical calculations; a decoder which decodes the non-exception status signals and the exception status signals; and a selector which selects one output instructed by the microprogram controlling portion from among the outputs of the decoder; wherein the microprogram controlling portion carries out the controlling operation in accordance with the output of the selector; the fast floating point processor further comprising an error

0305530

memorizing portion at the input side of the selector, wherein the error memorizing portion memorizes the occurrence of an error in correspondence to each of the outputs corresponding to the exception status signals among the outputs of the decoder until the series of calculations are completed, when an error has occurred during the series of calculations.

BRIEF DESCRIPTION OF THE DRAWINGS

Figure 1 shows an outline of the construction of an example of fast floating point processor (FFP);

Figure 2 shows a conventional construction of the status signal decoding portion 20 in Fig. 1;

Figure 3 shows the basic construction of the present invention; and,

Figure 4 shows an example of the construction of the status signal decoding portion 20 in the fast floating point processors (FFP) of Fig. 1, as an embodiment of the present invention.

BEST MODE FOR CARRYING OUT THE INVENTION

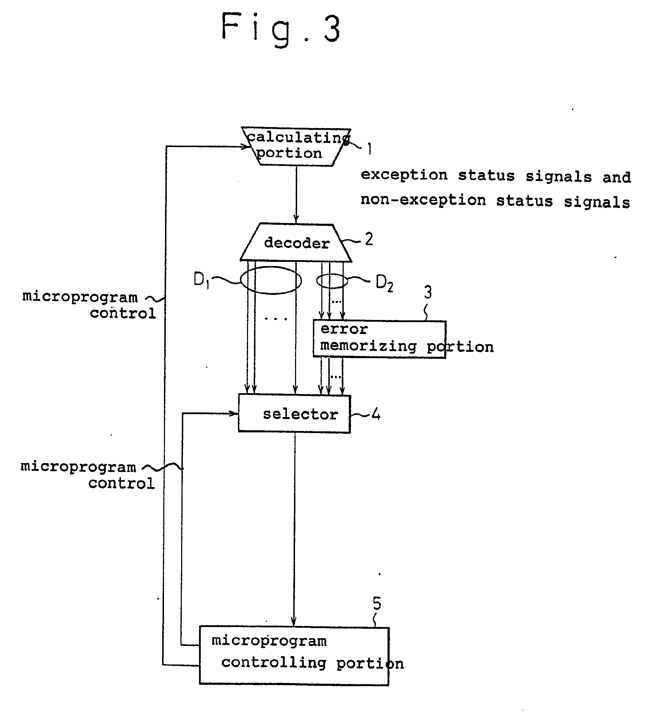

Figure 3 shows the basic construction of the fast floating point processor according to present invention. In Fig. 3, reference numeral 1 is a calculating portion which carries out a series of calculations consisting of arithmetic and comparison/logical calculations under microprogram control, and outputs non-exception status signals which indicate the results of the comparison/logical calculations, or exception status signals each of which indicate an occurrence of an error in the arithmetic or comparison/logical calculations; reference numeral 2 is a decoder which decodes the non-exception status signals and the exception status signals; reference numeral 4 is a selector which selects one output instructed by the microprogram controlling portion from among the outputs of the decoder 2; reference numeral 5 is a microprogram controlling portion which controls the fast floating point processor in accordance with a microprogram and the output of the selector; and reference numeral 3 is an error memorizing portion which memorizes the occurrence of an error in correspondence to each of the outputs corresponding to the exception status signals among the outputs of the decoder 2 until the series of calculations are completed, when one error has occurred during the series of calculations.

In the fast floating point processor according to the present invention, the non-exception status signal or exception status signal, which are output for every calculation cycle during a series of calculations, are decoded at the decoder 2, and whether or not at least one error has occurred during the series of calculations is memorized in the error memorizing portion in correspondence to each of the outputs corresponding to the exception status signals among the outputs of the decoder 2, and therefore, it is possible to check whether or not an error has occurred during the series of calculations in correspondence to each of the outputs corresponding to the exception status signals, by controlling the selector 4 under the control of the microprogram controlling portion 5 when the series of calculations are completed.

Accordingly, the present invention can reduce the number of executions of conditional jump instructions, compared with the conventional fast floating point processor wherein the microprogram controlling portion 5 controls the selector 4 to check whether or not an error has occurred during each calculation cycle when each calculation cycle is completed, and thus the jump address field in the microcode register which was used for the conditional jump instructions can be used for another purpose, consequently, a degree of freedom in programing is increased.

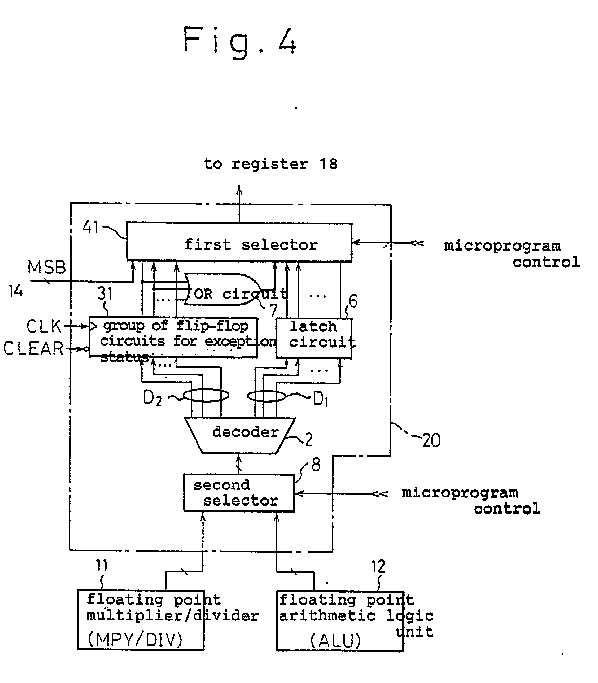

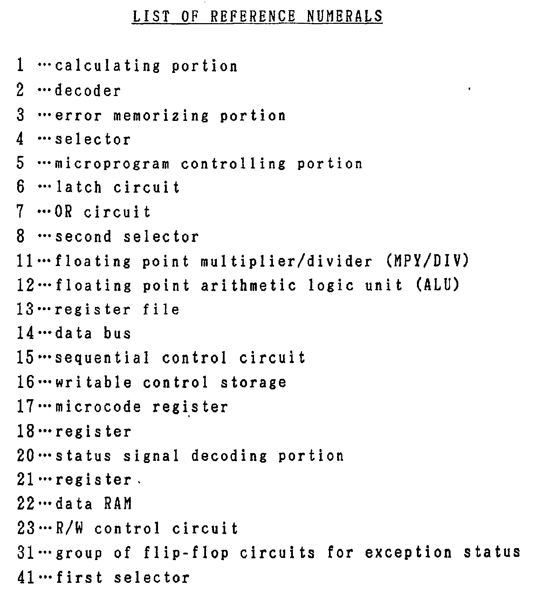

Figure 4 shows an example of the construction of the status signal decoding portion 20 in the fast floating point processor (FFP) of Fig. 1, as an embodiment of the present invention.

Although the construction of the status signal decoding portion 20 in Fig. 4, which consists of a first selector 41, a second selector 8, a decoder 2, and a latch circuit 6, is the same as the corresponding construction in the status signal decoding portion 20 in Fig. 2, each of the outputs $D_2$ corresponding to the exception status signals among the outputs of the decoder 2 is connected through the group of flip-flop circuits for exception status 31 to the first selector 41, and each of the outputs of the group of flip-flop registers for exception status 31 is also connected in parallel to the input terminals of the OR circuit 7. Further, the output of the OR circuit 7 is connected to one of the inputs of the first selector 41.

The above group of flip-flop circuits for exception status 31 consists of a group of set-reset type flip-flop circuits, each of which flip-flop circuits receives the corresponding one of the outputs $D_z$ of the decoder 2, which outputs correspond to the exception status signals, as a set input. For example, if, for one microcycle, "1" is input from one of the above outputs $D_z$ of the decoder to the group of flip-flop registers for exception status 31, the flip-flop circuit corresponding to the above one of the outputs $D_z$ in the group of flip-flop registers for exception status 31 is set, and then the output of the flip-flop circuit is held until the flip-flop circuit is reset, regardless of the state of the above one of the outputs $D_z$ in the following microcycles. The reset terminals of these elements, each of which functions as a set-reset type flip-flop circuit as mentioned above, are connected to a common CLEAR input, and all of the elements operate synchronously with a clock pulse (CLK).

An example of the operation of the abovementioned status signal decoding portion 20 is explained hereinafter with reference to Figs. 4 and 1.

Assuming that the data input to the floating point multiplier/divider (MPY/DIV) 11 is "0", the occurrence of the error, DIVIDED BY ZERO, is transferred to the status signal decoding portion 20 from the status signal output port of the MPY/DIV 11 in a form of a 4-bits signal. This signal is applied to one of two input ports of the second selector 8 of Fig. 4. As the MPY/DIV 11 and ALU 12 are controlled so that the ALU 12 and the MPY/DIV 11 do not output effective outputs at the same time, the second selector 8 is controlled by the microprogram to select the output of the MPY/DIV 11 at the timing at which status signals are output from the MPY/DIV 11. Accordingly, the signal in the form of a 4-bits signal from the MPY/DIV 11 showing the occurrence of the error, DIVIDED BY ZERO, is input to the decoder 2. The decoder decodes the signal, and accordingly, makes the state of the corresponding output ( one among the outputs $D_z$ corresponding to the aforementioned exception status signals, because DIVIDED BY ZERO is an error state ) "1". The output of the decoder 2 corresponding to the state DIVIDED BY ZERO is input to the corresponding flip-flop circuit in the aforementioned group of flip-flop circuits for exception status 31, sets the flip-flop circuit, and the output of the flip-flop circuit is held in the "1" state. The output of the flip-flop circuit "1" is input to both the first selector 41 and the OR circuit 7, and accordingly, the output of the OR circuit 7 is also held in the "1" state, since one of the inputs is held in the "1" state.

When a series of calculations are completed, the first selector 41 selects the output of the OR circuit 7 in accordance with the microprogram control ( by a conditional jump instruction loaded on the microcode register 17 in Fig. 1 ). If the output of the OR circuit 7 is "0", it is recognized that no error has occurred during the series of calculations in the MPY/DIV 11 and the ALU 12. If the output of the OR circuit 7 is "1", it is recognized that at least one error has occurred during the series of calculations, and accordingly, the microprogram controlling portion 5 controls the first selector 41 to select each of the outputs of the group of flip-flop circuits for exception status 31 in turn, and thereby confirms the kind of error that has occurred.

As mentioned above, by applying the status signal decoding portion 20 as shown in Fig. 4 to the construction of FFP as shown in Fig. 1, it becomes possible to check whether or not at least one error has occurred in the MPY/DIV 11 and the ALU 12, by one operation under the microprogram control at the time at which a series of calculations in the MPY/DIV 11 and the ALU 12 are completed.

As described hitherto, the present invention reduces the number of executions of jump instructions in microprogram control of fast floating point processors, and the jump address field in the microcode register formerly used for the conditional jump instructions can be used for another purpose.

INDUSTRIAL APPLICABILITY

The present invention is useful when applied to fast floating point processors under microprogram control.

CLAIMS

1. A fast floating point processor comprising: a calculating portion (1) which carries out a series of calculations consists of arithmetic and comparison/logical calculations under the control of a microprogram controlling portion (5), and outputs, for each cycle of said calculations, non-exception status signals which indicate the results of the comparison/logical calculations, or exception status signals each of which indicates an occurrence of error in said arithmetic and comparison/logical calculations; a decoder (2) which decodes said non-exception status signals and said exception status signals; and a selector (4) which selects one output instructed by said microprogram controlling portion (5) to be selected from among the outputs of said decoder (2); wherein said microprogram controlling portion (5) carries out a control operation in accordance with an output of said selector (4); the fast floating point processor further comprising an error memorizing portion (3) in an input side of said selector (4), said error memorizing portion (3) memorizing an occurrence of an error in correspondence to each of the outputs corresponding to said exception status signals among outputs of said decoder (2) until said series of calculations is completed, when an error has occurred during said series of calculations.

2. A fast floating point processor according to claim 1, wherein the outputs of said error memorizing portion (3) are connected in parallel with each other to an OR circuit (7), and the output of said OR circuit (7) is also connected to one input of said selector (4).

# Fig.1

# Fig. 2

# Fig.3

calculating portion 1

exception status signals and
non-exception status signals

decoder 2

$D_1$ $D_2$ 3

microprogram control

error memorizing portion

. . . . . .

selector 4

microprogram control

microprogram controlling portion 5

# Fig. 4

to register 18

41 — first selector — microprogram control

MSB

14

31 — OR circuit ... 7 — ... 6

CLK → group of flip-flop circuits for exception status

CLEAR → latch circuit

$D_2$ ~ $D_1$

decoder 2 ~20

8

second selector — microprogram control

11 — floating point multiplier/divider (MPY/DIV)

12 — floating point arithmetic logic unit (ALU)

## LIST OF REFERENCE NUMERALS

1 ···calculating portion
2 ···decoder
3 ···error memorizing portion
4 ···selector
5 ···microprogram controlling portion
6 ···latch circuit
7 ···OR circuit
8 ···second selector
11···floating point multiplier/divider (MPY/DIV)
12···floating point arithmetic logic unit (ALU)
13···register file
14···data bus
15···sequential control circuit
16···writable control storage
17···microcode register
18···register
20···status signal decoding portion
21···register.
22···data RAM
23···R/W control circuit
31···group of flip-flop circuits for exception status
41···first selector

0305530

# INTERNATIONAL SEARCH REPORT

International Application No  PCT/JP88/00117

**I. CLASSIFICATION OF SUBJECT MATTER** (if several classification symbols apply, indicate all) [6]

According to International Patent Classification (IPC) or to both National Classification and IPC

Int.Cl[4]   G06F7/00, 9/22, 11/30

**II. FIELDS SEARCHED**

| Minimum Documentation Searched [7] | |
|---|---|
| Classification System | Classification Symbols |
| IPC | G06F7/00, 9/22-9/28, 11/00-11/34 |

| Documentation Searched other than Minimum Documentation to the Extent that such Documents are Included in the Fields Searched [8] |
|---|
| Jitsuyo Shinan Koho     1971 - 1988 |
| Kokai Jitsuyo Shinan Koho     1971 - 1988 |

**III. DOCUMENTS CONSIDERED TO BE RELEVANT [9]**

| Category [*] | Citation of Document, [11] with indication, where appropriate, of the relevant passages [12] | Relevant to Claim No. [13] |
|---|---|---|
| Y | JP, A, 54-55336 (NEC Corporation) 2 May 1979 (02. 05. 79) Page 3, lower right column, line 13 to page 5, upper left column, line 14, Figs. 3 to 4 (Family: none) | 1, 2 |
| Y | JP, A, 51-146143 (Hitachi, Ltd.) 15 December 1976 (15. 12. 76) Page 2, lower left column, line 10 to page 2, lower right column, line 10, Fig. 5 (Family: none) | 1, 2 |

* Special categories of cited documents: [10]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but late than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

**IV. CERTIFICATION**

| Date of the Actual Completion of the International Search | Date of Mailing of this International Search Report |
|---|---|
| April 19, 1988 (19. 04. 88) | May 9, 1988 (09. 05. 88) |
| International Searching Authority | Signature of Authorized Officer |
| Japanese Patent Office | |

Form PCT ISA/210 (second sheet) (January 1985)